# EUROPEAN PATENT SPECIFICATION

(11) **EP 2 594 107 B1**
(45) Date of publication and mention of the grant of the patent: **23.01.2019**
(21) Application number: 10854795.1
(22) Date of filing: 13.07.2010
(51) Int. Cl.: H04W 76/27, H04W 52/02

(54) **IMPROVED SYSTEM FOR DEVICE STATE TRANSITION CONTROL**
VERBESSERTES SYSTEM ZUR STATUSWECHSELSTEUERUNG EINER VORRICHTUNG
SYSTÈME AMÉLIORÉ POUR UN CONTRÔLE DE LA TRANSITION D'ÉTAT D'UN DISPOSITIF

(43) Date of publication of application: 22.05.2013
(73) Proprietor: Telefonaktiebolaget LM Ericsson (publ), 164 83 Stockholm (SE)
(72) Inventor: WILLARS, Per, S-185 94 Vaxholm (SE)
(74) Representative: Brann AB
(86) International application number: PCT/SE2010/050835
(87) International publication number: WO 2012/008886

(56) References cited:
- EP-A1- 1 600 022
- EP-A1- 2 389 030
- US-A1- 2008 014 959
- US-A1- 2010 144 363
- US-A1- 2010 144 363
- Christian Brosch ET AL: "Adaptive Radio Resource Management Scheme for UMTS Packet Data", , 13 April 2005 (2005-04-13), XP055324870, Retrieved from the Internet: URL:http://ieeexplore.ieee.org/ielx5/57552 54/5755255/05755332.pdf?tp=&arnumber=57553 32&isnumber=5755255 [retrieved on 2016-11-30]
- LIERS F. ET AL.: 'UMTS data capacity improvements employing dynamic RRC timeouts' PERSONAL, INDOOR AND MOBILE RADIO COMMUNICATIONS, 2005. PIMRC 2005. IEEE 16TH INTERNATIONAL SYMPOSIUM ON, [Online] vol. 4, 11 September 2005 - 14 September 2005, pages 2186 - 2190, XP010928081 Retrieved from the Internet: <URL:http://ieeexplore.ieee.org/stamp/stamp .jsp?tp=&arnumber=1651833&isnumber=34629>
- CHUAH M. ET AL.: 'Impacts of inactivity timer values on UMTS system capacity' WIRELESS COMMUNICATIONS AND NETWORKING CONFERENCE, 2002. WCNC2002. 2002 IEEE, [Online] vol. 2, March 2002, pages 897 - 903, XP010585715 Retrieved from the Internet: <URL:http://ieeexp!ore.ieee.org/stamp/stamp .jsp?tp=&arnumber=993390&isnumber=21424>

## Description

### Technical field

The present application relates to a device state controlling entity, a method of operating a device state controlling entity, a radio network controller, and a wireless communications device.

### Background

In a wireless communication system, a wireless communications device can take different states, which define the properties of the wireless communications link between the device and the network. Each state strikes a different balance of the user experience (such as bitrate, latency), the network resources used, and the power consumption in the device.

In a wireless communications system a device may be in either a connected state or an idle state. These states may be defined as: a connected state being where the device has an active wireless communications link with a network; and an idle state being where the device does not have an active communications link with a network such that its radio is not active or in idle. These states may be subdivided.

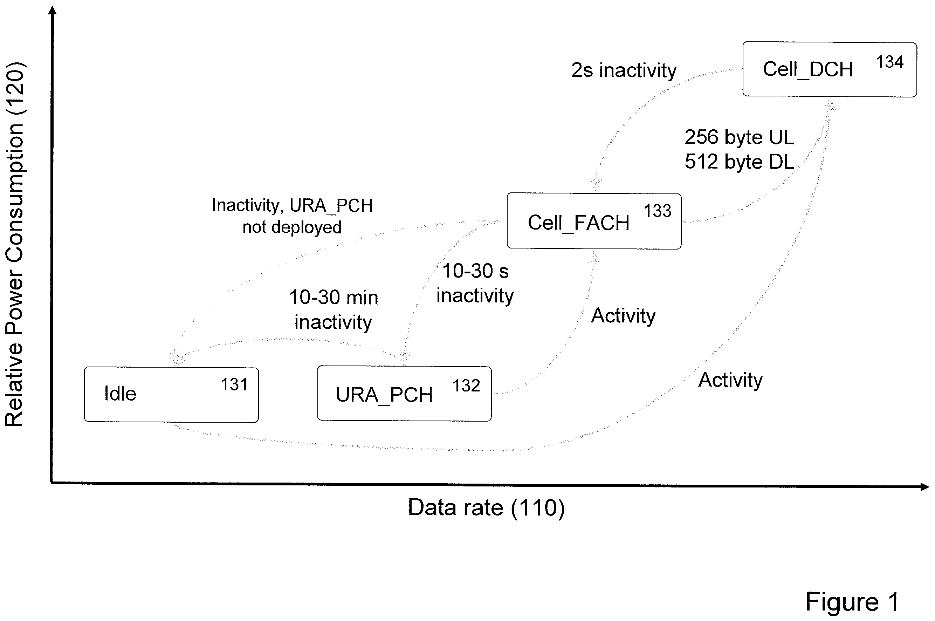

Figure 1 shows the state diagram in a typical WCDMA implementation, with the four common states of that implementation used as an example. Each state is shown occupying a position against two axes with data rate 110 on the horizontal axis and relative power consumption 120 on the vertical axis. In order of increasing data rate or decreasing latency the states are Idle 131, URA_PCH 132, Cell_FACH 133, and Cell_DCH 134. In order of increasing power consumption, the states are Idle 131 and URA_PCH 132 with substantially the same power consumption, followed by Cell_FACH 133, and Cell_DCH 134.

When in Idle state 131 the device is substantially dormant and does not communicate with the network although it does listen for certain broadcast messages. In Idle, the device is unknown in the radio access network and only known in the core network. The device must update the network only when moving to a cell in another Routing Area, and so in this state the device consumes minimal network resources. In this state the device consumes the least amount of power, by only waking up according to a sleepmode cycle.

URA_PCH 132 (which for the purposes of this explanation can include both URA_PCH and Cell_PCH) is a registered state. URA means UTRAN Registration Area and PCH means Paging Channel. In this state the network, for example the Radio Network Controller (RNC), knows that the device exists in a cell that is part of the URA (UTRAN Registration Area), but other than having that basic knowledge the network doesn't dedicate any resources to the device. The device must update the network only when moving to a cell in another "URA" (UTRAN registration area). Similar to idle state 131, the device only needs to wake up occasionally according to a sleepmode (so called DRX) cycle, thus consuming very little power.

A device cannot transmit when in Idle state 131 or URA-PCH 132. To transmit the device must transition to either Cell_FACH 133 or Cell_DCH 134.

Cell_FACH 133 is a connected state. FACH means Forward Access Channel. A device in Cell_FACH state is assigned a shared resource to use (the FACH channel for downlink, the RACH channel for uplink). The device must update the network about its location at every cell change. In this state the device communicates with the network and the radio network controller (RNC) knows where the device is located. In the current implementation of WCDMA small amounts of data can be transmitted at a relatively low data rate while the device is in the FACH state. Typical limits on data transmission in this state are up to 64kbps in the downlink and up to 8-16kbps in the uplink. A device in Cell_FACH can transfer small data amounts in this state, and there is some latency to switch up to Cell_DCH to transmit higher volumes of data. Cell_DCH 134 is a dedicated state, DCH means Dedicated Channel. In this state the wireless communications device is allocated a dedicated transport channel in the downlink (DL) and in the uplink (UL) along with a requisite number of physical channels, depending on the required bandwidth. When a device is in Cell_DCH 134 it is consuming the most network resources, both radio network controller processing and air interface resources, while the drain on the battery of the device is also at its highest level. A device in Cell_DCH has the shortest latency to start transmitting, and when it does start transmitting it can transfer with high bandwidth. Where HSPA is used, a device may be in a dedicated state using HS-channels. When using HSPA, the device is allocated scheduling buffer memory in the base station and an individual code for the uplink.

As shown in figure 1, state transitions are typically triggered by data activity, or inactivity. An upswitch to a higher state is triggered by data activity. In some cases (e.g. from URA_PCH 132), the particular state switched to is dependent on the amount of data in the sender's queue. A downswitch to a lower state is triggered by data inactivity. For example, a transition from Cell_DCH 134 to Cell_FACH 133 may be triggered by 2 seconds of inactivity, and a transition from Cell_FACH 133 to URA_PCH 132 (or Idle, or Cell_PCH) may be triggered by between 10 and 30 seconds of inactivity.

Transitions between device states require signaling between the device and the network. This signaling is performed over the control plane. The control plane load in a particular network node can be expected to be high when a high number of devices connected to that node change state.

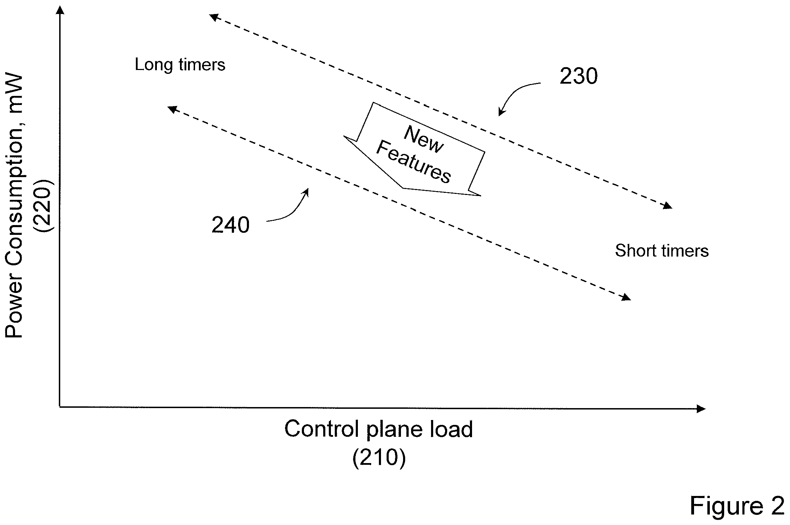

Configuring the parameters for state transitions (data volume thresholds for upswitch, and inactivity timers for downswitch) involves a tradeoff between device power consumption (short timers preferred), control plane load due to the state transition procedures (long timers preferred) and end-user experience in terms of latency (typically, long timers preferred). This tradeoff is illustrated in Figure 2, which shows a graph having control plane load 210 on the horizontal axis and Power consumption 220 on the vertical axis. The trade off between long timers and short timers is shown by dashed curve 230, which shows the loci of available points of timer values and the respective control plane load and the power consumption.

For example, setting the inactivity timers short to reduce power consumption will result in the operator needing to provide extra capacity in network nodes to manage the increased control plane load. Conversely, setting long timers will make power consumption high, reducing the length of time a battery may power the device. Reduced power consumption in a wireless communications device allows for more efficient use of the battery, allowing a smaller battery to be used or a longer operating time allowed between battery charges.

It should be noted that new radio features (such as Continuous Packet Connectivity (CPC), High Speed Forward Access Channel (HS-FACH) etc) will improve the position of the curve as shown by curve 240, but there is still a tradeoff between conflicting pressures along that curve.

CPC is a feature which allows the device to shut down its transmitter and receiver and to only wake up periodically, but still stay in the Cell_DCH state. This is used after a number of milliseconds inactivity, e.g. between sending voice packets in case of VoIP, and allows the device to save battery.

Power consumption in a wireless communications device is heavily dependent on the state. Typically, the power consumption in Cell_FACH is around 50% of the power consumption in Cell_DCH (without CPC). Power consumption in URA_PCH and Idle is around 1-2% of Cell_DCH power consumption. A major factor in power consumption is how often and long the device must swtich on the radio (particularly the receiver). With a "sleep mode" scheme, the device can turn off the radio, and only wake up occasionally. This is why the power consumption is much lower in URA_PCH and Idle. A form of sleep mode is applied to Cell_DCH with the CPC feature, and similar functionality is expected for Cell_FACH.

Christian Brosch ET AL: "Adaptive Radio Resource Management Scheme for UMTS Packet Data", relates to an approach for the management of the RRC states for data calls. The approach employs a demand-based selection of the mobiles to change their state. The selection is based on the load of three different kinds of resources, namely radio, code and signaling processing resources. A scheme is proposed, which is based on the simplex method that automatically adapts to the current situation. In the proposed scheme the resources that are held by inactive mobiles are released based on the demand and the load situation rather than the inactivity time of the mobile. US 2010/144363 A1 provides a technique for optimizing cellular network resource utilization under high load conditions. The inactivity timers that regulate network resource utilization between activity periods are adjusted based on current cell load conditions. The inactivity timer settings are based on load condition estimates that mitigate signaling associated with current load conditions assessment.

### Summary

There is provided an improved system for device station transition control. This addresses the problem of the trade-off between power consumption in a device and the control plane load in a network the device is in communication with.
Battery efficiency is continuously relevant, both day and night, whereas the control plane load is primarily relevant during the time of day when the control plane load is highest. In some networks, there is a particular spike in activity which may be referred to as a 'busy hour'. The dimensioning of the node capacity (e.g. of the RNC) must account for the highest-load period. To address the above described problem, there is provided a system whereby state transition decisions are made dependent upon the control plane load in a network node. This means that when the control plane load is anyway low, a more battery-efficient scheme is used, and only during the relatively short periods of high control plane load, a scheme is used that is less battery-efficient, but that reduces the control plane load.

Accordingly, there is provided a method of operating a device state controlling entity, the method comprising using one of a first state transition algorithm and a second state transition algorithm to determine when to perform
operational state transitions in at least one wireless communications device, wherein operational state transitions are transitions between connection states of the wireless communications device, wherein the usage of the state transition algorithm is based upon an indication of the control plane load in a network the at least one wireless communications device is in communication with, wherein the first state transition algorithm sets a timer based on the indication of the control plane load as derived from a time of day together with historical measurements, wherein the second state transition algorithm sets the timer based on the indication of the control plane load as measured, and where the timer is the amount of time a state connection is allowed to go inactive before the wireless communications device is transitioned to another state.

There is further provided a device state controlling entity arranged to use one of a first state transition algorithm and a second state transition algorithm to determine when to perform operational state transitions in at least one wireless communications device, wherein operational state transitions are transitions between connection states of the wireless communications device, wherein the usage of the state transition algorithm is based upon an indication of a control plane load in a network the at least one wireless communications device is in communication with, wherein the first state transition algorithm sets a timer based on the indication of the control plane load as derived from a time of day together with historical measurements, wherein the second state transition algorithm sets the timer based on the indication of the control plane load as measured, and where the timer is the amount of time a state connection is allowed to go inactive before the wireless communications device is transitioned to another state.

There is further provided a radio network controller including the aforementioned device state controlling entity.

There is thus provided a system which dynamically sets state transition requirements such that during busy periods control plane load in the network is minimized and in less busy periods, where there is excess control plane capacity, the power consumption of the device is prioritized. Overall, the network can handle more traffic during busy periods, and average device power consumption is reduced.

For high control plane load the state transition algorithm used may give a high threshold for state transition. For low control plane load the state transition algorithm used may give a low threshold for state transition.

For high control plane load the state transition algorithm used may give fewer state transitions than the state transition algorithm used for low control plane load.

Different state algorithms may be used dependent on the indication of the control plane load. Different state transition algorithm parameters may be used for a state transition algorithm dependent on the indication of the control plane load.

The method may further comprise obtaining an indication of the control plane load. The indication of the control plane load may be obtained from a time of day and a look-up table. The look-up table may be derived from historical data of control plane load. The indication of the control plane load may be based on a measurement of the control plane load. The measurement may be an estimate of the load in at least one processor in at least one network node. The measurement may be of the number of wireless communications devices connected to the network controller.

The method may further comprise sending a state transition instruction to the at least one wireless communications device.

The at least one wireless communications device may have a plurality of operational states and wherein when to perform operational state transitions may be determined by state transition instructions sent by the device state controlling entity.

The operational state may define at least one of: data rate for communications between the wireless communications device and the network; power consumption; communication latency; and network resource usage. The operational states of the wireless communications device may comprise at least one of: connected, and idle. The operation states of the at least one wireless communications device may comprise at least one of: Cell_DCH, Cell_FACH, URA_PCH, Cell_PCH, and Idle.

### Brief description of the drawings

An improved system for device state transition control will now be described, by way of example only, with reference to the accompanying drawings, in which:
Figure 1 shows communication state transitions in a typical current communications system;
Figure 2 illustrates the tradeoff between power consumption and control plane load;
Figure 3 illustrates a known wireless communications system;
Figure 4 illustrates a wireless communications system implementing the method disclosed herein;
Figure 5 shows the operation of a device state controlling entity;
Figure 6 shows device state transitions according to a first example Figure 7 shows device state transitions according to a second example.

### Detailed description

There is a device state controlling entity in the network that controls the connection states of a wireless communications device and transitions between these states. In a WCDMA system the device state controlling entity is in the RNC. In an LTE system the device state controlling entity is in the eNB. In some wireless communications systems the device state controlling entity is in the wireless communications device.

All changes between states involve signaling in order to prepare both the network and the device for the state change and then also to perform the change. This signaling increases the control plane (signaling-related) load in the network and must be handled by appropriate dimensioning of the signaling capacity. Note that the control plane load induced by state switching may appear also in nodes other than the radio connection controlling node, e.g. in a core network node such as SGSN (Serving GPRS Support Node) or GGSN (Gateway GPRS Support Node) for WCDMA systems or MME (Mobility Management Entity) or Serving/Packet Gateway (for an LTE/EPC system).

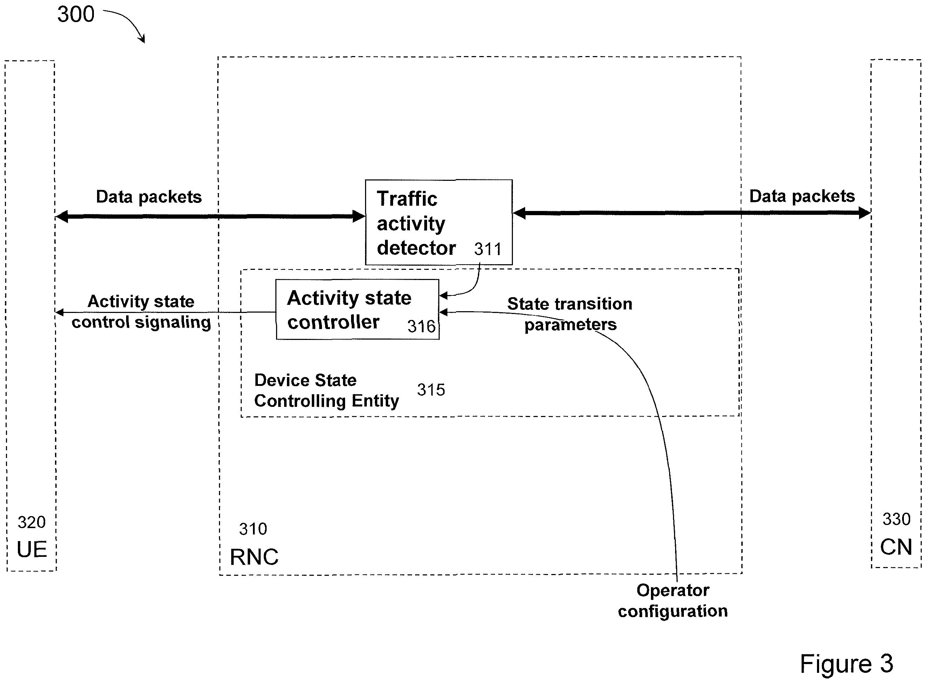

Figure 3 illustrates a known wireless communications system 300 arranged according to the WCDMA standard. A radio network controller (RNC) 310 controls the connection between a user equipment (UE) 320 and a core network (CN) 330. The RNC 310 includes a traffic activity detector 311 which monitors traffic in the connection between the UE 320 and the CN 330. The RNC 310 also includes a device state controlling entity 315. The device state controlling entity 315 comprises an activity state controller 316, which receives traffic activity reports from the traffic activity detector 311. The activity state controller 316 signals activity state instructions to the UE 320 over a control plane, which is shown as being in parallel with data packets sent between the UE 320 and the CN 330. In practice, data packets and the activity state instructions may be sent to the UE 320 over the same physical connection. Upon receipt of an instruction to change state, the UE 320 changes state.

In operation, the traffic activity detector 311 monitors the connection between the UE 320 and the CN 330. The traffic activity detector 311 then sends activity reports to the activity state controller 316. The activity state controller 316 can then determine which state the UE 320 should be in by applying state transition algorithms. Also shown in Figure 3 is the operator configuration of the activity state controller 316. This operator configuration may include setting state transition parameters for the state transition algorithms in the activity state controller. These parameters may include, for example, how much data the UE 320 has in its uplink buffer before it is transitioned from FACH 133 to DCH 134, and the period of connection inactivity before the UE 320 is transitioned from FACH 133 to URA 132.

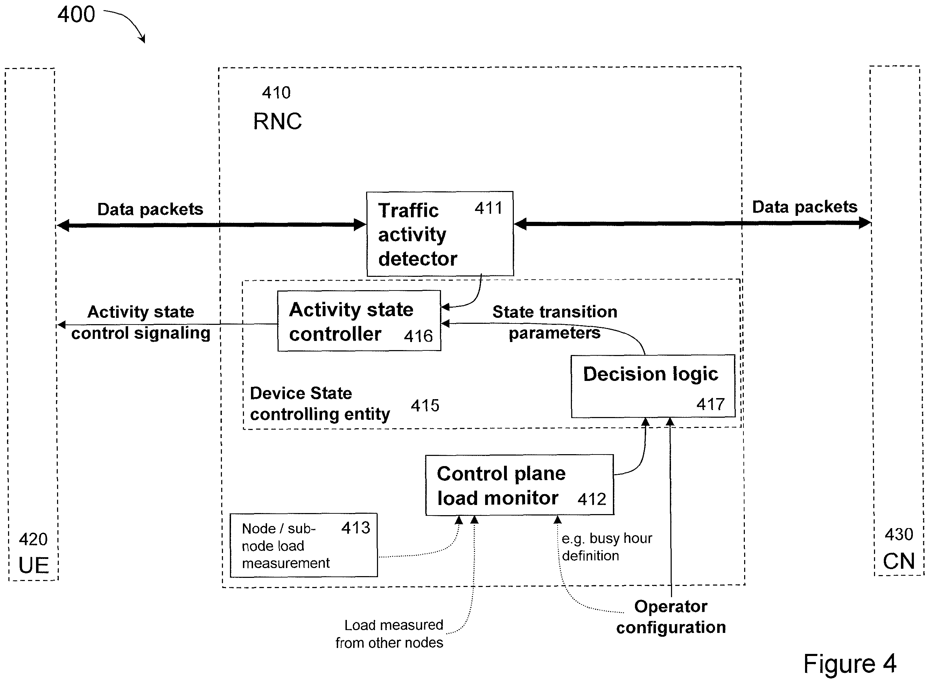

Figure 4 illustrates a wireless communications system 400 implementing the method disclosed herein. For explanatory purposes this is shown as an extension to the WCDMA system of Figure 3. An RNC 410 controls the connection between a UE 420 and a CN 430. The RNC 410 includes a traffic activity detector 411 which monitors traffic in the connection between the UE 420 and the CN 430, and a control plane load indicator 412. The RNC 410 also includes a device state controlling entity 415. The control plane load indicator 412 provides an indication of the control plane load to the device state controlling entity 415. The device state controlling entity 415 comprises an activity state controller 416, which receives traffic activity reports from the traffic activity detector 411. The device state controlling entity 415 also comprises decision logic 417, which receives the indication of the control plane load created by the control plane load indicator 412. The activity state controller 416 signals activity state instructions to the UE 420 over a control plane. Upon receipt of an instruction to change state, the UE 420 changes state.

In operation, the traffic activity detector 411 monitors the connection between the UE 420 and the CN 430. The traffic activity detector 411 then sends activity reports to the activity state controller 416. The activity state controller 416 can thus determine which state the UE 420 should be in by applying state transition algorithms.

In system 400, the control plane load monitor 412 sends an indication of the control plane load to the decision logic 417. The decision logic 417 sends state transition parameters and/or references to state transition algorithms to the activity state controller 416 based upon the indication of the control plane load it receives from the control plane load monitor 412. The control plane load monitor 412 may directly measure the control plane load, or it may generate the indication of control plane load by some indirect means such as using historical data and the time of day.

Accordingly, the device state controlling entity 415 is modified so that state transition parameters (in 3G WCDMA these may be the values for inactivity timers or upswitch data volume thresholds for example) and/or state transition algorithms are dynamically adjusted based on an indication of the relevant nodes' control plane load. In the present example the relevant node is the RNC 410. This indication of the control plane load is supplied by node/sub-node load measurer 413, which provides a direct estimation of the processor load in the node (e.g. RNC), or an indication of the load measured in another node in the network (e.g. a Core Network node, such as a serving gateway in the LTE/EPC system). Alternatively, the indication of control plane load may be derived from the time of day, together with a configuration of the "busy hour" based on historical measurements for the network or another network. Alternatively still, the indication could also be based on a combination of the above.

The output of the decision logic 417 is dependent upon the control plane load indication it receives and its internal logic. The decision logic 417 may be updated by the network operator. Further, the operator may also configure the control plane load indicator 412 to configure which indication of control plane load the control plane load monitor 412 should use, or to define particular aspects of the control plane load indication such as when the "busy hour" is.

The control plane load monitor 412 may receive measurements of the control plane load from a node load measurer 413. Alternatively, the control plane load monitor 412 may receive indications of control plane loads measured in other nodes.

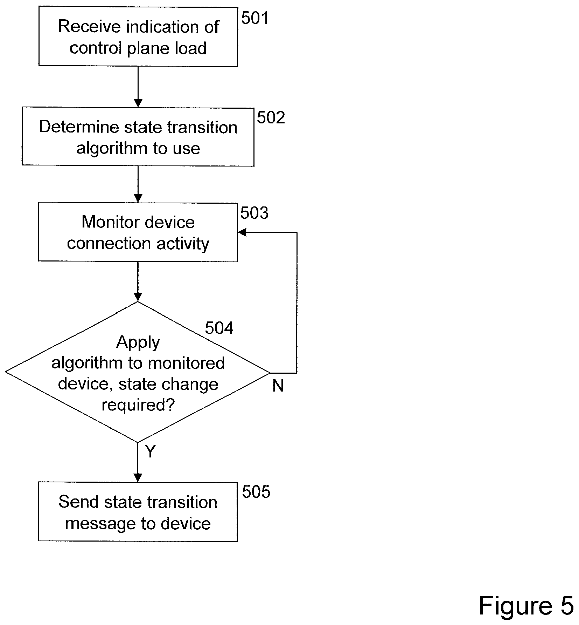

Figure 5 shows the operation of a device state controlling entity. The entity receives 501 an indication of the control plane load, and uses that to determine 502 which state transition algorithm to use. The indication of control plane load may be used to select which type of algorithm to use or it may be used to select which parameters to use within a predetermined type of algorithm. The device controlling entity then monitors 503 device connection activity by way of a traffic activity detector, for example. This monitoring may include the monitoring of the length of periods of connection inactivity, or the amount of data in at least one buffer ready to be transmitted, for example. A determination 504 is then made by applying the state transition algorithm selected; the determination is as to whether a state change in the device should be performed. If the determination 504 is negative, then the device state controlling entity returns to monitoring 503 the device connection activity. If the determination 504 is positive, then a state transition message is sent 505 to the device. Upon receipt of the state transition message the device transitions to the state indicated in that message.

In embodiments where the device controlling entity is in the device, the state transition message is a state transition instruction sent from the device controlling entity to the relevant control portion of the device. Upon receipt of such an instruction the control portion of the device may change the device state or it may send a state change request message to the network.

Two examples of algorithms that could be used in decision logic 417 to modify the state transition parameters in the state transition algorithms follow. These examples refer to particular transition parameters, defined as follows.
- The DCH inactivity timer is the amount of time a DCH state connection is allowed to go inactive before the respective device is transitioned to FACH.
- The FACH inactivity timer is the amount of time a FACH state connection is allowed to go inactive before the respective device is transitioned to URA.
- The Upswitch FACH-to-DCH threshold is the amount of data ready to be transmitted in the uplink (UL) or downlink (DL) direction, above which the device is transitioned from FACH to DCH.

### Example 1 of decision logic:

```
           IF (isBusyhour (time of day)) THEN {
                DCH inactivity timer = 3 s
                FACH inactivity timer = 30 s
          } ELSE {
                DCH inactivity timer = 1 s
                FACH inactivity timer = 7 s
          }
```

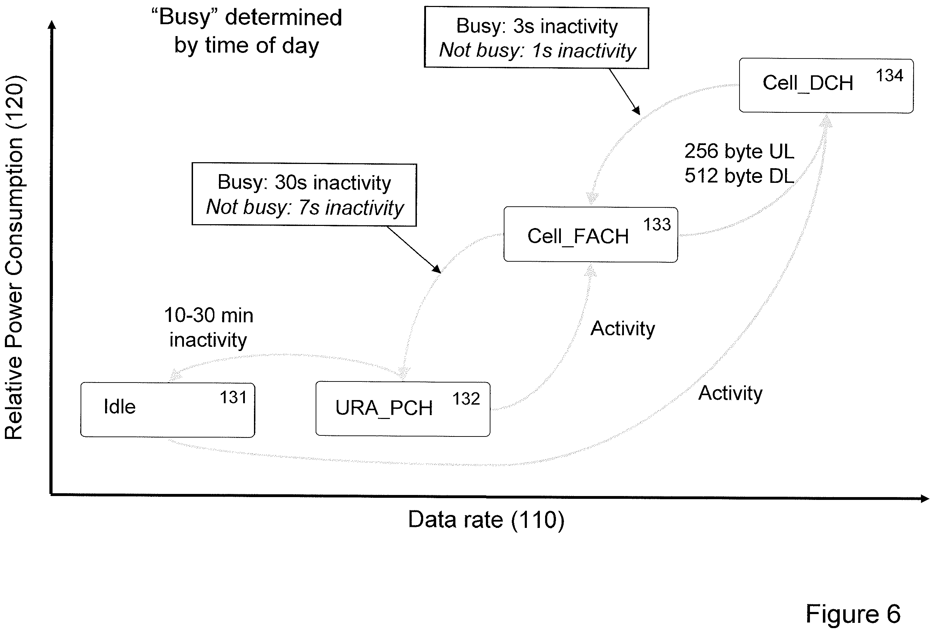

In example 1, during the busy hour the DCH inactivity timer and the FACH inactivity timers are set to longer than they are outside of the busy hour meaning that there should be fewer state transitions during the busy hour. The other state transitions are determined as shown in Figure 1. Figure 6 shows communication state transitions according to example 1 for both busy hour and non-busy hour times. For Cell_DCH to Cell_FACH, and Cell_FACH to URA_PCH transitions, the transition requirements for both busy and non busy loads is shown, with the non-busy transition requirements shown in italics.

### Example 2 of decision logic:

```
          IF (RNC control plane load > 0.3) THEN {
               DCH inactivity timer = 3 s
               FACH inactivity timer = 7 + (RNC control plane load - 0.3) * 50
               Upswitch FACH-to-DCH threshold, UL = 1024 bytes
               Upswitch FACH-to-DCH threshold, DL = 1024 bytes
          } ELSE {
               DCH inactivity timer = 1 s
                FACH inactivity timer = 7 s
                Upswitch FACH-to-DCH threshold, UL = 256 bytes
                Upswitch FACH-to-DCH threshold, DL = 512 bytes
          }
```

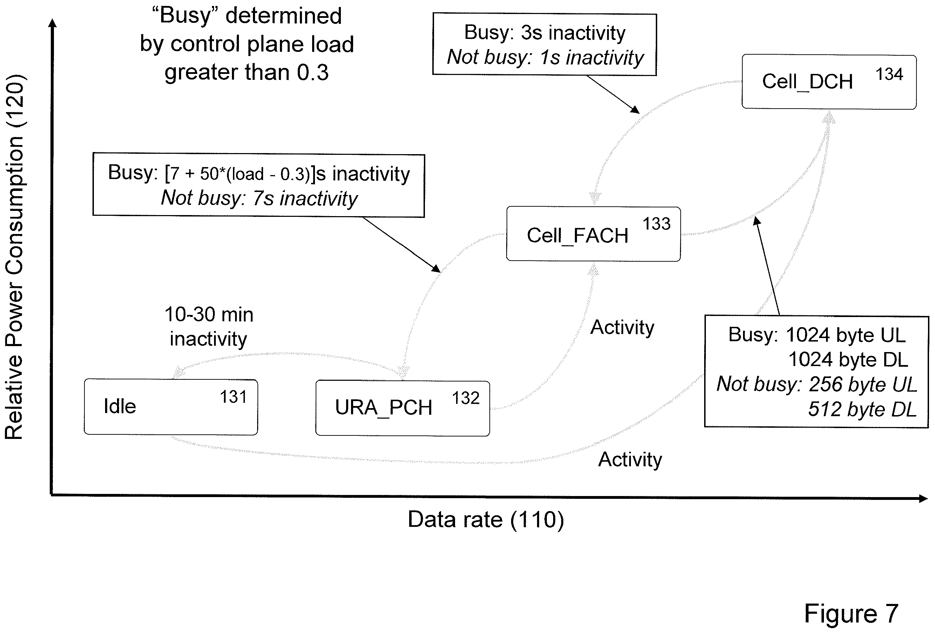

In example 2, the RNC control plane load is measured in a relative scale from 0 to 1. When the control plane load is greater than 0.3, the control plane is determined to be busy and the DCH inactivity timer is set to a value that is higher than when the load is less than 0.3. The FACH inactivity timer has a default value for non-busy times (load less than 0.3), which is increased proportionally as the load rises above 0.3. The uplink and downlink Upswitch Cell_FACH to Cell_DCH thresholds are set lower when the control plane load is less than or equal to 0.3, and these take different values in that state. Again, the state transition parameters of example 2 are arranged such that fewer state transitions take place when the control plane load is high. Further, in example 2 the state transition parameters are progressive such that as the control plane load increases some state transition parameters are progressively increased, resulting in even fewer state transitions as the control plane load increases. Figure 7 shows communication state transitions according to example 2. For Cell_FACH to Cell_DCH, Cell_DCH to Cell_FACH, and Cell_FACH to URA_PCH transitions, the transition requirements are shown for both when not busy (control plane load both less than or equal to 0.3) and when busy (control plane load greater than 0.3), with the not busy transition requirements shown in italics.

The following variations in state transition parameters may also be applied:
- An algorithm including any type of state transition parameter (not limited to inactivity timers and upswitch data volume thresholds).
- Using a different state transition algorithm when control plane load is high compared to when it is low.
- Using the same state transition algorithm at high and low control plane loads, but with different parameter settings, either as discrete sets of values, or described as a function of the control plane load.

It should be noted that in some cases, the control plane load may be detected as high only for a sub-part of a node. In that case, it is possible that only the connections affected by the higher loaded part of the node would be subject to the modified state transition algorithm. For example, where a subset of processors of an RNC in a network have a high control plane load but another subset of processors does not, then only the connections handled by the processors with the high control plane load are subject to the modified state transition algorithm.

Further, the control plane load may be detected as high only for one node within a network. In that case, it is possible that only the connections affected by the higher loaded node would be subject to the modified state transition algorithm. For example, where one RNC in a network has a high control plane load but another does not, then only the connections handled by the RNC with the high control plane load are subject to the modified state transition algorithm.

In some embodiments, the control plane load in a plurality of nodes may be taken as input to derive a control plane load indication. In this case, the radio connection controlling node (e.g. RNC) would receive a signal of a measure of the control plane load from the other node or nodes (such as a core network node), this to be taken into account in the modification of the state transition algorithm. Further, it may be that only the connections associated with a higher loaded other node would be subject to a modified state transition algorithm (or parameterization) as handled by the controlling node. That is, a subset of connections handled by a controlling node may be given a modified state transition algorithm based upon control plane load in another node common to the subset of the connections.

The control plane load induced by high intensity of signaling related to state switching could be related to a radio interface resource, e.g. a signaling channel resource in a cell. In this case, only connections associated with that limiting resource would be subject to a modified state switching algorithm. Furthermore, in some device implementations the device is able to evaluate the need to switch state (e.g. to save battery power), and send a request for switching state to the network (to the device state controlling entity). In such a case, there is a state transition algorithm within the device and this algorithm can take into account the control plane load of the network. This requires the network to report an indication of the current control plane load to the device, which is possible by a broadcast channel or a point-to-point channel.

It should be noted that the decision logic could also consider other transition parameters, for example: the number of users in a given state; the load resources of a given state; and the capabilities of the device and network (for example the support of CPC means the values of other timers are also possible transition parameters to be used in the state transition algorithm).

It will be apparent to the skilled person that the exact order and content of the actions carried out in the method described herein may be altered according to the requirements of a particular set of execution parameters. Accordingly, the order in which actions are described and/or claimed is not to be construed as a strict limitation on order in which actions are to be performed.

Further, while examples have been given in the context of particular communications standards, these examples are not intended to be the limit of the communications standards to which the disclosed method and apparatus may be applied. For example, while specific examples have been given in the context of WCDMA, the principles disclosed herein can also be applied to an LTE system, other wireless communication system, and indeed any communication system which uses device states.

## Claims

1. A method of operating a device state controlling entity (415), **characterized in that**, the method comprising using one of a first state transition algorithm and a second state transition algorithm to determine when to perform operational state transitions in at least one wireless communications device, wherein operational state transitions are transitions between connection states of the wireless communications device, wherein the usage of the state transition algorithm is based upon an indication of a control plane load (210) in a network the at least one wireless communications device is in communication with, wherein the first state transition algorithm sets a timer based on the indication of the control plane load (210) as derived from a time of day together with historical measurements, wherein the second state transition algorithm sets the timer based on the indication of the control plane load as measured, and wherein the timer is set for an amount of time a state connection is allowed to go inactive before the wireless communications device is transitioned to another state.

2. The method of claim 1, wherein the second state transition algorithm sets a threshold for an amount of data to be transmitted in an uplink or downlink direction above which the wireless communications device is transitioned to another state.

3. The method of any preceding claim, wherein the method further comprises obtaining an indication of the control plane load (210).

4. The method of any preceding claim, wherein the indication of the control plane load (210) as measured is an estimate of the control plane load in at least one processor in at least one network node.

5. The method of any preceding claim, wherein the indication of the control plane load (210) as measured is of a number of wireless communications devices connected to a radio network controller (410).

6. The method of any preceding claim, wherein the method further comprises sending a state transition instruction to the at least one wireless communications device.

7. The method of any preceding claim, wherein the at least one wireless communications device has a plurality of operational states, and wherein when to perform the operational state transitions in the at least one wireless communications device is determined by state transition instructions sent by the device state controlling entity (415).

8. The method of any preceding claim, wherein the operational state defines at least one of:
data rate (110) for communications between the at least one wireless communications device and the network;
power consumption (220);
communication latency; and
network resource usage.

9. The method of any preceding claim, wherein the operational states of the at least one wireless communications device comprise at least one of: connected, Cell_DCH (134), Cell FACH (133), URA_PCH (132), Cell_PCH, and Idle (131).

10. A device state controlling entity (415) arranged to use one of a first state transition algorithm and a second state transition algorithm to determine when to perform operational state transitions in at least one wireless communications device, wherein operational state transitions are transitions between connection states of the wireless communications device, **characterized in that**, the usage of the state transition algorithm is based upon an indication of a control plane load in a network the at least one wireless communication device is in communication with, wherein the first state transition algorithm sets a timer based on the indication of the control plane load as derived from a time of day together with historical measurements, wherein the second state transition algorithm sets the timer based on the indication of the control plane load as measured, and wherein the timer is set for an amount of time a state connection is allowed to go inactive before the wireless communications device is transitioned to another state.

11. A radio network controller (410) including the device state controlling entity (415) of claim 10.

12. A wireless communication device including the device state controlling entity (415) of claim 10.

## Patentansprüche

1. Verfahren zum Betreiben einer Statussteuereinrichtung einer Vorrichtung (415), **dadurch gekennzeichnet, dass** das Verfahren die Verwendung eines aus einem ersten Statuswechselalgorithmus und einem zweiten Statuswechselalgorithmus umfasst, um zu ermitteln, wann Betriebsstatuswechsel in mindestens einer drahtlosen Kommunikationsvorrichtung durchzuführen sind, wobei Betriebsstatuswechsel Wechsel zwischen Anschlussstatus der drahtlosen Kommunikationsvorrichtung sind,
wobei die Verwendung des Statuswechselalgorithmus auf einer Angabe einer Steuerebenenlast (210) in einem Netzwerk, mit dem die mindestens eine drahtlose Kommunikationsvorrichtung in Kommunikation steht, basiert, wobei der erste Statuswechselalgorithmus einen Zeitgeber basierend auf der Angabe der Steuerebenenlast (210) nach Ableitung von einer Tageszeit zusammen mit vergangenen Messunge, einstellt, wobei der zweite Statuswechselalgorithmus den Zeitgeber basierend auf der Angabe der Steuerebenenlast nach Messung einstellt, und wobei der Zeitgeber für eine Zeitdauer eingestellt ist, während der eine Statusverbindung inaktiv werden kann, bevor die drahtlose Kommunikationsvorrichtung in einen anderen Status wechselt.

2. Verfahren nach Anspruch 1, wobei der zweite Statuswechselalgorithmus einen Grenzwert für eine Menge an Daten einstellt, die in einer Uplink- oder einer Downlink-Richtung übertragen werden können, über dem die drahtlose Kommunikationsvorrichtung in einen anderen Status wechselt.

3. Verfahren nach einem der vorstehenden Ansprüche, wobei das Verfahren ferner das Erhalten einer Angabe der Steuerebenenlast (210) umfasst.

4. Verfahren nach einem der vorstehenden Ansprüche, wobei die Angabe der Steuerebenenlast (210) nach Messung eine Schätzung der Steuerebenenlast in mindestens einem Prozessor in mindestens einem Netzknoten ist.

5. Verfahren nach einem der vorstehenden Ansprüche, wobei die Angabe der Steuerebenenlast (210) nach Messung von einer Anzahl von drahtlosen Kommunikationsvorrichtungen kommt, die mit einer Funknetzsteuerung (410) verbunden sind.

6. Verfahren nach einem der vorstehenden Ansprüche, wobei das Verfahren ferner das Senden einer Statuswechselanweisung an die mindestens eine drahtlose Kommunikationsvorrichtung umfasst.

7. Verfahren nach einem der vorstehenden Ansprüche, wobei die mindestens eine drahtlose Kommunikationsvorrichtung eine Vielzahl von Betriebsstatus umfasst und wobei durch die Statuswechselanweisungen, die von der Statussteuereinrichtung einer Vorrichtung (415) gesendet werden, festgelegt wird, wann die Betriebsstatuswechsel in der mindestens einen drahtlosen Kommunikationsvorrichtung erfolgen müssen.

8. Verfahren nach einem der vorstehenden Ansprüche, wobei der Betriebsstatus mindestens eines der Folgenden definiert:
Datenrate (110) für Kommunikationen zwischen der mindestens einen drahtlosen Kommunikationsvorrichtung und dem Netzwerk;
Stromverbrauch (220);
Kommunikationsverzögerung; und
Netzwerkressourcennutzung.

9. Verfahren nach einem der vorstehenden Ansprüche, wobei die Betriebsstatus der mindestens einen drahtlosen Kommunikationsvorrichtung mindestens einen der folgenden umfassen: verbunden, Cell_DCH (134), Cell_FACH (133), URA_PCH (132), Cell_PCH und Ruhe (131).

10. Statussteuereinrichtung einer Vorrichtung (415), die geeignet ist, um einen aus einem ersten Statuswechselalgorithmus und einem zweiten Statuswechselalgorithmus zu verwenden, um zu ermitteln, wann Betriebsstatuswechsel in mindestens einer drahtlosen Kommunikationsvorrichtung durchzuführen sind, wobei Betriebsstatuswechsel Wechsel zwischen Anschlussstatus der drahtlosen Kommunikationsvorrichtung sind,
**dadurch gekennzeichnet, dass** die Verwendung des Statuswechselalgorithmus auf einer Angabe einer Steuerebenenlast in einem Netzwerk, mit dem die mindestens eine drahtlose Kommunikationsvorrichtung in Kommunikation steht, basiert, wobei der erste Statuswechselalgorithmus einen Zeitgeber basierend auf der Angabe der Steuerebenenlast nach Ableitung von einer Tageszeit zusammen mit vergangenen Messungen einstellt, wobei der zweite Statuswechselalgorithmus den Zeitgeber basierend auf der Angabe der Steuerebenenlast nach Messung einstellt, und wobei der Zeitgeber für eine Zeitdauer eingestellt ist, während der eine Statusverbindung inaktiv werden kann, bevor die drahtlose Kommunikationsvorrichtung in einen anderen Status wechselt.

11. Funknetzsteuerung (410) umfassend die Statussteuereinrichtung einer Vorrichtung (415) nach Anspruch 10.

12. Drahtlose Kommunikationsvorrichtung, umfassend die Statussteuereinrichtung einer Vorrichtung (415) nach Anspruch 10.

## Revendications

1. Procédé de fonctionnement d'une entité de commande d'état de dispositif (415), **caractérisé en ce que**, le procédé comprend l'utilisation d'un parmi un premier algorithme de transition d'état et un second algorithme de transition d'état pour déterminer le moment pour réaliser des transitions d'état fonctionnelles dans au moins un dispositif de communications sans fil, dans lequel des transitions d'état fonctionnelles sont des transitions entre des états de connexion du dispositif de communications sans fil,
dans lequel l'utilisation de l'algorithme de transition d'état est basée sur une indication d'une charge de plan de commande (210) dans un réseau avec lequel l'au moins un dispositif de communications sans fil est en communication, dans lequel le premier algorithme de transition d'état définit un temporisateur sur la base de l'indication de la charge de plan de commande (210) telle qu'elle est déduite d'une heure du jour conjointement avec des mesures historiques, dans lequel le second algorithme de transition d'état définit le temporisateur sur la base de l'indication de la charge de plan de commande telle qu'elle est mesurée, et dans lequel le temporisateur est défini pour une quantité de temps durant laquelle une connexion d'état est autorisée à devenir inactive avant que le dispositif de communications sans fil fasse l'objet d'une transition vers un autre état.

2. Procédé selon la revendication 1, dans lequel le second algorithme de transition d'état définit un seuil pour une quantité de données à transmettre dans une direction de liaison montante ou de liaison descendante au-dessus duquel le dispositif de communications sans fil fait l'objet d'une transition vers un autre état.

3. Procédé selon l'une quelconque des revendications précédentes, dans lequel le procédé comprend en outre l'obtention d'une indication de la charge de plan de commande (210) .

4. Procédé selon l'une quelconque des revendications précédentes, dans lequel l'indication de la charge de plan de commande (210) telle qu'elle est mesurée est une estimation de la charge de plan de commande dans au moins un processeur dans au moins un noeud de réseau.

5. Procédé selon la revendication, dans lequel l'indication de la charge de plan de commande (210) telle qu'elle est mesurée est celle d'un nombre de dispositifs de communications sans fil connectés à un contrôleur de réseau radio (410).

6. Procédé selon l'une quelconque des revendications précédentes, dans lequel le procédé comprend en outre l'envoi d'une instruction de transition d'état à l'au moins un dispositif de communications sans fil.

7. Procédé selon l'une quelconque des revendications précédentes, dans lequel l'au moins un dispositif de communications sans fil a une pluralité d'états fonctionnels, et dans lequel le moment de réaliser les transitions d'état fonctionnelles dans l'au moins un dispositif de communications sans fil est déterminé par des instructions de transition d'état envoyées par l'entité de commande d'état de dispositif (415) .

8. Procédé selon l'une quelconque des revendications précédentes, dans lequel l'état fonctionnel définit au moins un parmi :
un débit de données (110) pour des communications entre l'au moins un dispositif de communications sans fil et le réseau ;
une consommation d'énergie (220) :
une latence de communication ; et
une utilisation de ressources de réseau.

9. Procédé selon l'une quelconque des revendications précédentes, dans lequel les états fonctionnels de l'au moins un dispositif de communications sans fil comprennent au moins un parmi : connecté, Cell_DCH (134), Cell_FACH (133), URA_PCH (132), Cell_PCH et Repos (131).

10. Entité de commande d'état de dispositif (415) agencée pour utiliser un parmi un premier algorithme de transition d'état et un second algorithme de transition d'état pour déterminer le moment pour réaliser des transitions d'état fonctionnelles dans au moins un dispositif de communications sans fil, dans laquelle des transitions d'état fonctionnelles sont des transitions entre des états de connexion du dispositif de communications sans fil, **caractérisée en ce que**, l'utilisation de l'algorithme de transition d'état est basée sur une indication d'une charge de plan de commande dans un réseau avec lequel l'au moins un dispositif de communication sans fil est en communication, dans laquelle le premier algorithme de transition d'état définit un temporisateur sur la base de l'indication de la charge de plan de commande telle qu'elle est déduite d'une heure du jour conjointement avec des mesures historiques, dans laquelle le second algorithme de transition d'état définit le temporisateur sur la base de l'indication de la charge de plan de commande telle qu'elle est mesurée, et dans laquelle le temporisateur est défini pour une quantité de temps durant laquelle une connexion d'état est autorisée à devenir inactive avant que le dispositif de communications sans fil fasse l'objet d'une transition vers un autre état.

11. Contrôleur de réseau radio (410) incluant l'entité de commande d'état de dispositif (415) selon la revendication 10.

12. Dispositif de communication sans fil incluant l'entité de commande d'état de dispositif (415) selon la revendication 10.
